# EUROPEAN PATENT SPECIFICATION

(11) **EP 4 227 113 B1**
(45) Date of publication and mention of the grant of the patent: **07.05.2025**
(21) Application number: 23151233.6
(22) Date of filing: 12.01.2023
(51) Int. Cl.: B60C 9/20, B60C 9/28, B60C 9/18, B60C 9/22

(54) **HEAVY DUTY PNEUMATIC TIRE**
SCHWERLASTLUFTREIFEN
PNEUMATIQUE POUR POIDS LOURDS

(30) Priority: 09.02.2022 JP 2022018677
(43) Date of publication of application: 16.08.2023
(73) Proprietor: Sumitomo Rubber Industries, Ltd., Kobe-shi, Hyogo 651-0072 (JP)
(72) Inventor: OKABE, Taro, Kobe-shi, 651-0072 (JP)
(74) Representative: Manitz Finsterwald Patent- und Rechtsanwaltspartnerschaft mbB

(56) References cited:
- EP-A1- 4 180 241
- EP-A2- 1 800 903
- WO-A1-2015/197298
- JP-A- 2017 056 813
- KR-A- 20130 077 412
- US-A1- 2010 084 069
- US-A1- 2016 152 080
- US-A1- 2016 152 083
- US-A1- 2017 210 172

## Description

### BACKGROUND OF THE INVENTION

### Field of the Invention

The present invention relates to a heavy duty pneumatic tire.

### Background Art

The tread portion of a heavy duty pneumatic tire (hereinafter, referred to as a tire) is provided with a pair of cushion layers. The pair of cushion layers are disposed so as to be spaced apart from each other in the axial direction. Each cushion layer is located between an end of a belt and a carcass.

When the tire runs, strain occurs in a portion at each end of the belt. Various studies have been conducted for the cushion layers in order to prevent damage due to such strain (for example, Japanese Laid-Open Patent Publication No. 2015-209166).

A heavy duty pneumatic tire in accordance with the preamble of claim 1 is known from US 2010/084069 A1. Related tires are described in JP 2017 056813 A, EP 1 800 903 A2, US 2017/210172 A1, WO 2015/197298 A1, KR 2013 0077412 A1, US 2016/152080 A1, US 2016/152083 A1 and EP 4 180 241 A1 (document according to Article 54(3) EPC).

Against the backdrop of the tightening of environmental regulations and driver shortages in recent years, vehicles such as trucks and buses have increased load capacities and decreased floor heights. Accordingly, the demand for low-flatness tires has increased.

In a low-flatness tire, it is structurally more difficult to ensure a space for disposing cushion layers, than in a high-flatness tire. If cushion layers having conventional specifications are used in a low-flatness tire, each end of a belt may be raised when the tire expands. In the low-flatness tire, the internal pressure distributed to the belt is larger than in the high-flatness tire. In the low-flatness tire, a significant change of the ground-contact shape due to dimensional growth may occur. The ground-contact shape that lacks stability leads to a decrease in uneven wear resistance.

In a tire, the load acting on the tread portion is reduced by bending of each side portion. The bending allowance of a low-flatness tire is smaller than that of a high-flatness tire. In the low-flatness tire, the degree of contribution of each side portion to reduction of the load acting on the tread portion is low. In the low-flatness tire, a larger load acts on the tread portion than in the high-flatness tire. The larger load may lead to a decrease in durability or uneven wear resistance.

The belt of a heavy duty pneumatic tire normally includes four belt plies stacked in the radial direction. Each belt ply includes a large number of belt cords aligned with each other. Normally, a steel cord is used as each belt cord. If the belt can be composed of three belt plies, mass reduction of the tire can be achieved. The mass reduction contributes to improvement of the fuel economy performance and an increase in the carrying capacity of a vehicle.

The present invention has been made in view of such circumstances. An object of the present invention is to provide a heavy duty pneumatic tire that can achieve stabilization of a ground-contact shape and reduction of a load acting on a tread portion, while achieving mass reduction thereof.

### SUMMARY OF THE INVENTION

The object is solved by a heavy duty pneumatic tire having the features of claim 1. Sub-claims are directed to preferable embodiments of the invention.

A heavy duty pneumatic tire according to an aspect of the present invention has a nominal aspect ratio of not greater than 65%. The tire includes: a tread having at least three circumferential grooves formed thereon; a pair of sidewalls each connected to an end of the tread; a pair of beads each located radially inward of the sidewall; a carcass located inward of the tread and the pair of sidewalls and extending on and between a first bead and a second bead out of the pair of beads; a reinforcing layer located radially inward of the tread; and a buffer layer located radially inward of the reinforcing layer and formed from a crosslinked rubber. Among the at least three circumferential grooves, a circumferential groove located on each outer side in an axial direction is a shoulder circumferential groove. The reinforcing layer includes a belt including a large number of belt cords aligned with each other, and a band including a helically wound band cord. The buffer layer is stacked on the carcass, and each end of the buffer layer is located axially outward of an end of the belt. The belt includes a first belt ply stacked on the buffer layer, a second belt ply located radially outward of the first belt ply, and a third belt ply located radially outward of the second belt ply. The buffer layer includes a sheet portion and a pair of hump portions located axially outward of the sheet portion and thicker than the sheet portion. Each of the pair of hump portions has a maximum thickness at an end of the first belt ply. The hump portion is integrated with the sheet portion.

Preferably, in the heavy duty pneumatic tire, the sheet portion has an apparent thickness of not less than 2.2 mm and not greater than 2.8 mm.

Preferably, in the heavy duty pneumatic tire, each hump portion has an apparent maximum thickness of not less than 2.5 mm and not greater than 6.5 mm.

Preferably, in the heavy duty pneumatic tire, a ratio of a width of the buffer layer to a width of the tread is not less than 1.00 and not greater than 1.20.

Preferably, in the heavy duty pneumatic tire, a ratio of a distance in the axial direction from a position at which a first hump portion out of the pair of hump portions has a maximum thickness to a position at which a second hump portion out of the pair of hump portions has a maximum thickness, to a width of the belt, is not less than 0.95 and not greater than 1.05.

Preferably, in the heavy duty pneumatic tire, the band includes a full band located between the first belt ply and the second belt ply in a radial direction. Each end of the full band is located axially outward of the shoulder circumferential groove, each end of the full band is located axially inward of the end of the first belt ply, and each end of the full band is located axially inward of an end of the second belt ply.

More preferably, in the heavy duty pneumatic tire, the band further includes a pair of edge bands opposed to each other across an equator plane. Each of the pair of edge bands is located radially outward of the end of the full band.

According to the present invention, a heavy duty pneumatic tire that can achieve stabilization of a ground-contact shape and reduction of a load acting on a tread portion, while achieving mass reduction thereof, is obtained.

### BRIEF DESCRIPTION OF THE DRAWINGS

FIG. 1 is a cross-sectional view showing a part of a heavy duty pneumatic tire according to an embodiment of the present invention;
FIG. 2 is a schematic diagram illustrating the configuration of a reinforcing layer;
FIG. 3 is an enlarged cross-sectional view showing a part of the tire shown in FIG. 1;
FIG. 4 is an enlarged cross-sectional view showing a part of the tire shown in FIG. 3; and
FIG. 5 is an enlarged cross-sectional view showing a part of the tire shown in FIG. 3.

### DETAILED DESCRIPTION

Hereinafter, the present invention will be described in detail based on preferred embodiments with appropriate reference to the drawings.

In the present disclosure, a state where a tire is fitted on a standardized rim, the internal pressure of the tire is adjusted to a standardized internal pressure, and no load is applied to the tire is referred to as a standardized state.

In the present disclosure, unless otherwise specified, the dimensions and angles of each component of the tire are measured in the standardized state.

The dimensions and angles of each component in a meridian cross-section of the tire, which cannot be measured in a state where the tire is fitted on the standardized rim, are measured in a cross-section of the tire obtained by cutting the tire along a plane including a rotation axis, with the distance between right and left beads being made equal to the distance between the beads in the tire that is fitted on the standardized rim.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are standardized internal pressures.

A standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present disclosure, the "nominal aspect ratio" is the "nominal aspect ratio" included in "tyre designation" specified in JIS D4202 "Automobile tyres-Designation and dimensions".

In the present disclosure, a tread portion of the tire is a portion of the tire that comes into contact with a road surface. A bead portion is a portion of the tire that is fitted to a rim. A side portion is a portion of the tire that extends between the tread portion and the bead portion. The tire includes a tread portion, a pair of bead portions, and a pair of side portions as portions thereof.

In the present disclosure, the number of cords included per 5 cm width of a tire element, including aligned cords, is represented as the density of cords included in this element (unit: ends/5 cm). Unless otherwise specified, the density of the cords is obtained in a cross-section of the element obtained by cutting the element along a plane perpendicular to the longitudinal direction of the cords.

In the present disclosure, a crosslinked rubber refers to a molded product, of a rubber composition, obtained by pressurizing and heating the rubber composition. The rubber composition is an uncrosslinked rubber obtained by mixing a base rubber and chemicals in a kneading machine such as a Banbury mixer. The crosslinked rubber is also referred to as vulcanized rubber, and the rubber composition is also referred to as unvulcanized rubber.

Examples of the base rubber include natural rubber (NR), butadiene rubber (BR), styrene-butadiene rubber (SBR), isoprene rubber (IR), ethylene-propylene rubber (EPDM), chloroprene rubber (CR), acrylonitrile-butadiene rubber (NBR), and isobutylene-isoprene-rubber (IIR). Examples of the chemicals include reinforcing agents such as carbon black and silica, plasticizers such as aromatic oil, fillers such as zinc oxide, lubricants such as stearic acid, antioxidants, processing aids, sulfur, and vulcanization accelerators. Selection of a base rubber and chemicals, the amounts of the selected chemicals, etc., are determined as appropriate according to the specifications of components, such as a tread and a sidewall, for which the rubber composition is used.

In the present disclosure, a complex elastic modulus at a temperature of 70°C, of a component formed from a crosslinked rubber, of the components included in the tire, is measured using a viscoelasticity spectrometer ("VES" manufactured by Iwamoto Seisakusho) under the following conditions according to the standards of JIS K6394.
Initial strain = 10%
Dynamic strain = 2%
Frequency = 10 Hz
Deformation mode = tension

In this measurement, a test piece is sampled from the tire. When a test piece cannot be sampled from the tire, a test piece is sampled from a sheet-shaped crosslinked rubber (hereinafter, also referred to as a rubber sheet) obtained by pressurizing and heating a rubber composition, which is used for forming the component to be measured, at a temperature of 170°C for 12 minutes.

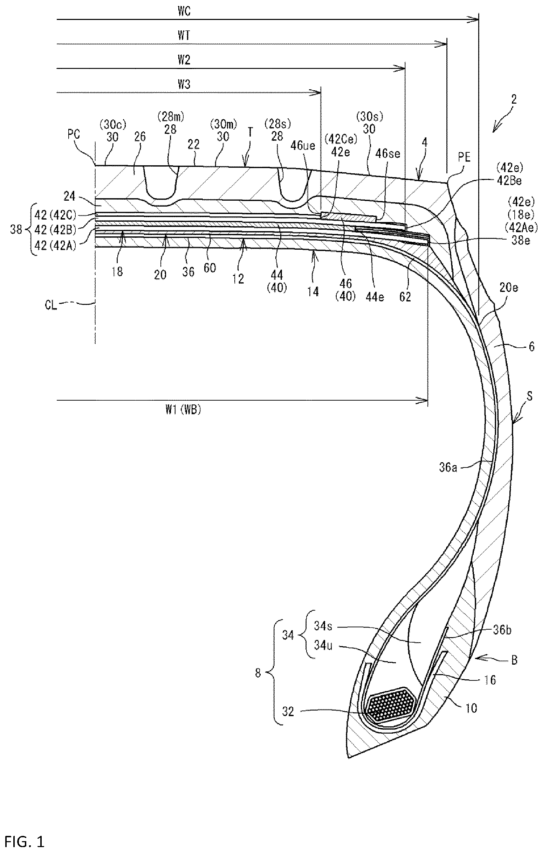

FIG. 1 shows a part of a heavy duty pneumatic tire 2 (hereinafter, also referred to simply as "tire 2") according to an embodiment of the present invention. The tire 2 is mounted to a vehicle such as a truck and a bus. The nominal aspect ratio of the tire 2 is not greater than 65%. In other words, the tire 2 has a nominal aspect ratio of not greater than 65%. The tire 2 is a low-flatness tire.

FIG. 1 shows a part of a cross-section (hereinafter, also referred to as meridian cross-section) of the tire 2 along a plane including the rotation axis of the tire 2. In FIG. 1, the right-left direction is the axial direction of the tire 2, and the up-down direction is the radial direction of the tire 2. The direction perpendicular to the surface of the drawing sheet of FIG. 1 is the circumferential direction of the tire 2. An alternate long and short dash line CL represents the equator plane of the tire 2.

The tire 2 includes a tread 4, a pair of sidewalls 6, a pair of beads 8, a pair of chafers 10, a carcass 12, an inner liner 14, a pair of steel fillers 16, a reinforcing layer 18, and a buffer layer 20.

The tread 4 comes into contact with a road surface at an outer surface thereof. The outer surface is a tread surface 22. In FIG. 1, reference character PC represents the point of intersection of the tread surface 22 and the equator plane CL. The point of intersection PC is the equator of the tire 2. The equator PC is the radially outer end of the tire 2.

In FIG. 1, reference character PE represents an end of the tread surface 22. A length indicated by an arrow WT is the width of the tread surface 22. The width WT of the tread surface 22 is the distance in the axial direction from a first end PE of the tread surface 22 to a second end PE of the tread surface 22. The width WT of the tread surface 22 is also referred to as a width WT of the tread 4.

In the tire 2, when the ends PE of the tread surface 22 cannot be identified from the appearance, the positions, on the tread surface 22, corresponding to the outer ends in the axial direction of a ground-contact surface obtained when the standardized load is applied to the tire 2 in the standardized state and the tire 2 is brought into contact with a flat surface at a camber angle of 0° are defined as the ends PE of the tread surface 22.

The tread 4 includes a base portion 24 and a cap portion 26 located radially outward of the base portion 24. The base portion 24 is formed from a crosslinked rubber that has low heat generation properties. The cap portion 26 is formed from a crosslinked rubber for which wear resistance and grip performance are taken into consideration. As shown in FIG. 1, the base portion 24 of the tire 2 covers the entirety of the reinforcing layer 18. The cap portion 26 covers the entirety of the base portion 24.

In the tire 2, at least three circumferential grooves 28 are formed on the tread 4. On the tread 4 shown in FIG. 1, four circumferential grooves 28 are formed. These circumferential grooves 28 are aligned in the axial direction and continuously extend in the circumferential direction.

Among the four circumferential grooves 28, the circumferential groove 28 located on each outer side in the axial direction is a shoulder circumferential groove 28s. The circumferential grooves 28 located axially inward of the shoulder circumferential grooves 28s are middle circumferential grooves 28m. The four circumferential grooves 28 of the tire 2 include a pair of the middle circumferential grooves 28m and a pair of the shoulder circumferential grooves 28s.

In the tire 2, from the viewpoint of contribution to drainage performance and traction performance, the width of each middle circumferential groove 28m is preferably not less than 2% and not greater than 10% of the width WT of the tread 4. The depth of each middle circumferential groove 28m is preferably not less than 13 mm and not greater than 25 mm. The width of each shoulder circumferential groove 28s is preferably not less than 1% and not greater than 7% of the width WT of the tread 4. The depth of each shoulder circumferential groove 28s is preferably not less than 13 mm and not greater than 25 mm. The width of each circumferential groove 28 is represented as the shortest distance from one edge of the circumferential groove 28 to the other edge of the circumferential groove 28.

As described above, at least three circumferential grooves 28 are formed on the tread 4. Accordingly, at least four land portions 30 are formed in the tread 4. On the tread 4 of the tire 2 shown in FIG. 1, four circumferential grooves 28 are formed, so that five land portions 30 are formed in the tread 4. These land portions 30 are aligned in the axial direction and continuously extend in the circumferential direction.

Among the five land portions 30, the land portion 30 located on each outer side in the axial direction is a shoulder land portion 30s. Each shoulder land portion 30s is located axially outward of the shoulder circumferential groove 28s and includes the end PE of the tread surface 22. The land portions 30 located axially inward of the shoulder land portions 30s are middle land portions 30m. The land portion 30 located axially inward of the middle land portions 30m is a center land portion 30c. The five land portions 30 of the tire 2 include the center land portion 30c, a pair of the middle land portions 30m, and a pair of the shoulder land portions 30s.

In the tire 2, the width of the center land portion 30c is not less than 10% and not greater than 18% of the width WT of the tread 4. The width of each middle land portion 30m is not less than 10% and not greater than 18% of the width WT of the tread 4. The width of each shoulder land portion 30s is not less than 15% and not greater than 25% of the width WT of the tread 4. The width of each land portion 30 is represented as the width in the axial direction of the top surface of the land portion 30 which forms a part of the tread surface 22.

In the tire 2, the land portion 30 located at the center in the axial direction among the land portions 30 formed in the tread 4, that is, the center land portion 30c, is located on the equator plane CL. The tire 2 includes the tread 4 formed such that the land portion 30 is located on the equator plane CL. The tread 4 may be formed such that the circumferential groove 28 is located on the equator plane CL.

Each sidewall 6 is connected to an end of the tread 4. The sidewall 6 is located axially outward of the carcass 12 and extends radially inward from the end of the tread 4. The sidewall 6 is located radially inward of the tread 4. The sidewall 6 is formed from a crosslinked rubber.

Each bead 8 is located radially inward of the sidewall 6. The bead 8 includes a core 32 and an apex 34.

The core 32 extends in the circumferential direction. The core 32 includes a wound wire made of steel. The core 32 has a substantially hexagonal cross-sectional shape.

The apex 34 is located radially outward of the core 32. The apex 34 includes an inner apex 34u and an outer apex 34s. The inner apex 34u extends radially outward from the core 32. The outer apex 34s is located radially outward of the inner apex 34u. The inner apex 34u is formed from a hard crosslinked rubber. The outer apex 34s is formed from a crosslinked rubber that is more flexible than the inner apex 34u.

Each chafer 10 is located axially outward of the bead 8. The chafer 10 is located radially inward of the sidewall 6. The chafer 10 comes into contact with a rim (not shown). The chafer 10 is formed from a crosslinked rubber for which wear resistance is taken into consideration.

The carcass 12 is located inward of the tread 4, the pair of sidewalls 6, and the pair of chafers 10. The carcass 12 extends on and between a first bead 8 and a second bead 8 out of the pair of beads 8.

The carcass 12 includes at least one carcass ply 36. The carcass 12 of the tire 2 is composed of one carcass ply 36. The carcass ply 36 is turned up around each core 32 from the inner side toward the outer side in the axial direction. The carcass ply 36 has a ply body 36a which extends from a first core 32 to a second core 32, and a pair of turned-up portions 36b which are connected to the ply body 36a and turned up around the respective cores 32 from the inner side toward the outer side in the axial direction.

The carcass ply 36 includes a large number of carcass cords aligned with each other, which are not shown in FIG. 1. These carcass cords are covered with a topping rubber. Each carcass cord intersects the equator plane CL. In the tire 2, an angle of the carcass cords relative to the equator plane CL (hereinafter, referred to as intersection angle of the carcass cords) is not less than 70° and not greater than 90°. The carcass 12 has a radial structure. The carcass cords of the tire 2 are steel cords.

The inner liner 14 is located inward of the carcass 12. The inner liner 14 is joined to the inner surface of the carcass 12 via an insulation (not shown) formed from a crosslinked rubber. The inner liner 14 forms an inner surface of the tire 2. The inner liner 14 is formed from a crosslinked rubber that has an excellent air blocking property. The inner liner 14 maintains the internal pressure of the tire 2.

Each steel filler 16 is located at a bead portion. The steel filler 16 is turned up around the core 32 from the inner side toward the outer side in the axial direction along the carcass ply 36. The steel filler 16 includes a large number of filler cords aligned with each other, which are not shown. Steel cords are used as the filler cords.

The reinforcing layer 18 is located between the tread 4 and the carcass 12 in the radial direction. The reinforcing layer 18 is located radially inward of the tread 4. The reinforcing layer 18 of the tire 2 includes a belt 38 and a band 40.

The belt 38 includes at least three belt plies 42. Each belt ply 42 is disposed such that both ends 42e thereof are opposed to each other across the equator plane CL.

The belt 38 includes a first belt ply 42A, a second belt ply 42B, and a third belt ply 42C. The first belt ply 42A, the second belt ply 42B, and the third belt ply 42C are aligned in the radial direction in this order.

In the tire 2, among the at least three belt plies 42 included in the belt 38, the belt ply 42 located on the innermost side in the radial direction is the first belt ply 42A, and the first belt ply 42A, the second belt ply 42B, and the third belt ply 42C are aligned in this order from the inner side. The belt 38 includes the first belt ply 42A, the second belt ply 42B located radially outward of the first belt ply 42A, and the third belt ply 42C located radially outward of the second belt ply 42B. In the tire 2, the belt 38 may be formed such that the first belt ply 42A, the second belt ply 42B, and the third belt ply 42C are aligned in this order from the outer side in the radial direction.

In the tire 2, the belt 38 may be composed of four or more belt plies 42. From the viewpoint of mass reduction of the tire 2, the belt 38 is preferably composed of three belt plies 42, that is, the first belt ply 42A, the second belt ply 42B, and the third belt ply 42C.

As shown in FIG. 1, an end 42Ae of the first belt ply 42A is located axially outward of the shoulder circumferential groove 28s. An end 42Be of the second belt ply 42B is located axially outward of the shoulder circumferential groove 28s. An end 42Ce of the third belt ply 42C is located axially outward of the shoulder circumferential groove 28s. The end 42Ce of the third belt ply 42C may be located axially inward of the shoulder circumferential groove 28s. From the viewpoint of preventing damage, the third belt ply 42C is disposed such that the end 42Ce of the third belt ply 42C does not overlap the shoulder circumferential groove 28s in the radial direction.

In FIG. 1, a length indicated by an arrow W1 is the width of the first belt ply 42A. A length indicated by an arrow W2 is the width of the second belt ply 42B. A length indicated by an arrow W3 is the width of the third belt ply 42C. The width of each belt ply 42 is the distance in the axial direction from a first end 42e of the belt ply 42 to a second end 42e of the belt ply 42. The width of the belt ply 42 is also referred to as width in the axial direction. The end of the belt ply 42 is represented by an end of a belt cord included in the belt ply 42 described later.

In the tire 2, the first belt ply 42A has the largest width W1, and the third belt ply 42C has the smallest width W3. The width W2 of the second belt ply 42B is smaller than the width W1 of the first belt ply 42A and larger than the width W3 of the third belt ply 42C. The belt 38 effectively increases the stiffness of a tread portion T.

In the tire 2, from the viewpoint of effectively increasing the stiffness of the tread portion T, the ratio (W1/WT) of the width W1 of the first belt ply 42A to the width WT of the tread 4 is preferably not less than 0.75 and not greater than 0.95. The ratio (W2/WT) of the width W2 of the second belt ply 42B to the width WT of the tread 4 is preferably not less than 0.70 and not greater than 0.90. The ratio (W3/WT) of the width W3 of the third belt ply 42C to the width WT of the tread 4 is preferably not less than 0.50. The width W3 of the third belt ply 42C is set as appropriate in consideration of the specifications of the tire 2 (in particular, the position of each shoulder circumferential groove 28s).

In the tire 2, among the at least three belt plies 42 included in the belt 38, the belt ply 42 located on the innermost side in the radial direction is the first belt ply 42A having the largest width W1.

In FIG. 1, a length indicated by an arrow WB is the width of the belt 38. In the tire 2, the width WB of the belt 38 is represented as the width of the belt ply 42 having the largest width. As described above, the first belt ply 42A has the largest width W1 in the axial direction. The width WB of the belt 38 of the tire 2 is represented as the width W1 of the first belt ply 42A. In the tire 2, the end 42Ae of the first belt ply 42Ais an end 38e of the belt 38. The end 38e of the belt 38 is also an end 18e of the reinforcing layer 18.

The band 40 includes a full band 44 and a pair of edge bands 46.

The full band 44 is disposed such that both ends 44e thereof are opposed to each other across the equator plane CL. Each end 44e of the full band 44 is located axially inward of the end 38e of the belt 38. Each end 44e of the full band 44 is located axially inward of the end 42Ae of the first belt ply 42A and located axially inward of the end 42Be of the second belt ply 42B. Each end 44e of the full band 44 is located axially outward of the end 42Ce of the third belt ply 42C.

The pair of edge bands 46 are disposed so as to be spaced apart from each other in the axial direction. A first edge band 46 and a second edge band 46 out of the pair of edge bands 46 are opposed to each other across the equator plane CL. In the tire 2, each of the first edge band 46 and the second edge band 46 is located radially outward of the second belt ply 42B, and the third belt ply 42C which forms a part of the belt 38 is located between the first edge band 46 and the second edge band 46.

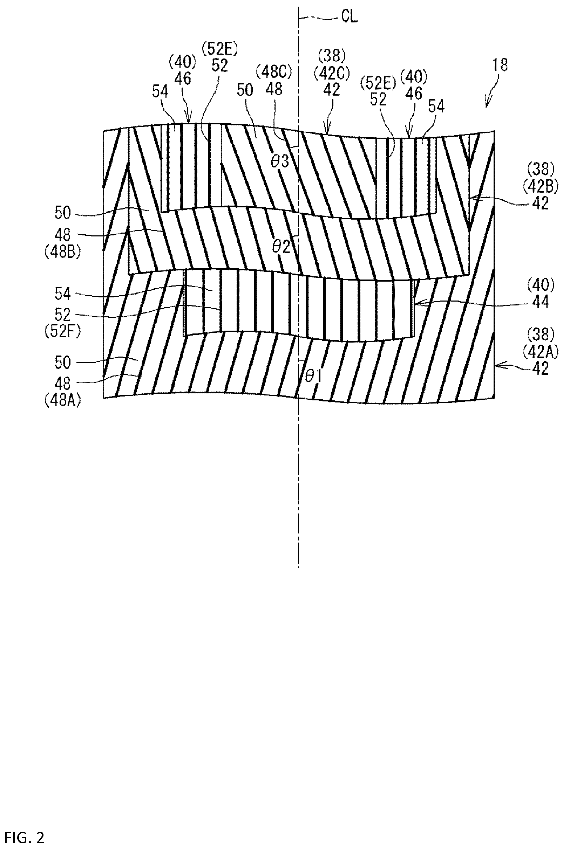

FIG. 2 shows the configuration of the reinforcing layer 18. In FIG. 2, the right-left direction is the axial direction of the tire 2, and the up-down direction is the circumferential direction of the tire 2. The direction perpendicular to the surface of the drawing sheet of FIG. 2 is the radial direction of the tire 2. The front side of the drawing sheet of FIG. 2 is the outer side in the radial direction, and the back side of this drawing sheet is the inner side in the radial direction.

As shown in FIG. 2, each belt ply 42 included in the belt 38 includes a large number of belt cords 48 aligned with each other. In FIG. 2, for the convenience of description, the belt cords 48 are represented by solid lines, but the belt cords 48 are covered with a topping rubber 50.

The belt cords 48 of the tire 2 are steel cords. The density of the belt cords 48 in each belt ply 42 is not less than 15 ends/5 cm and not greater than 30 ends/5 cm.

In each belt ply 42, the belt cords 48 are tilted relative to the circumferential direction.

The direction in which the belt cords 48 included in the first belt ply 42A are tilted (hereinafter, referred to as tilt direction of first belt cords 48A) is opposite to the direction in which the belt cords 48 included in the second belt ply 42B are titled (hereinafter, referred to as tilt direction of second belt cords 48B). In the tire 2, the belt 38 is formed such that the first belt cords 48A and the second belt cords 48B intersect each other.

The direction in which the belt cords 48 included in the third belt ply 42C are tilted (hereinafter, referred to as tilt direction of third belt cords 48C) is the same as the tilt direction of the second belt cords 48B. The tilt direction of the third belt cords 48C may be opposite to the tilt direction of the second belt cords 48B.

In FIG. 2, an angle θ1 is an angle of the belt cords 48 included in the first belt ply 42A relative to the equator plane CL (hereinafter, referred to as tilt angle θ1 of the first belt cords 48A). An angle θ2 is an angle of the belt cords 48 included in the second belt ply 42B relative to the equator plane CL (hereinafter, referred to as tilt angle θ2 of the second belt cords 48B). An angle θ3 is an angle of the belt cords 48 included in the third belt ply 42C relative to the equator plane CL (hereinafter, referred to as tilt angle θ3 of the third belt cords 48C).

In the tire 2, each of the tilt angle θ1 of the first belt cords 48A, the tilt angle θ2 of the second belt cords 48B, and the tilt angle θ3 of the third belt cords 48C is preferably not less than 10° and preferably not greater than 60°.

From the viewpoint of effectively restraining movement of the tread portion T and obtaining a ground-contact surface having a stable shape, the tilt angle θ1 of the first belt cords 48A is more preferably not less than 15° and more preferably not greater than 30°. The tilt angle θ1 of the first belt cords 48A is further preferably not greater than 20°. The tilt angle θ2 of the second belt cords 48B is more preferably not less than 15° and more preferably not greater than 30°. The tilt angle θ2 of the second belt cords 48B is further preferably not greater than 20°. The tilt angle θ3 of the third belt cords 48C is more preferably not less than 15° and more preferably not greater than 50°. The tilt angle θ3 of the third belt cords 48C is further preferably not greater than 25°.

As shown in FIG. 2, the full band 44 and the edge bands 46 included in the band 40 each include a helically wound band cord 52. In FIG. 2, for the convenience of description, the band cords 52 are represented by solid lines, but each band cord 52 is covered with a topping rubber 54.

In the tire 2, the band cords 52 are steel cords or cords formed from an organic fiber (hereinafter, referred to as organic fiber cords). In the case where organic fiber cords are used as the band cords 52, examples of the organic fiber include nylon fibers, polyester fibers, rayon fibers, and aramid fibers. As a band cord 52F of the full band 44 and band cords 52E of the edge bands 46, the same cord may be used, or different cords may be used. The band cords 52 used for the full band 44 and the edge bands 46 are determined according to the specifications of the tire 2.

As described above, the full band 44 includes the helically wound band cord 52F. The full band 44 has a jointless structure. In the full band 44, an angle of the band cord 52F relative to the circumferential direction is preferably not greater than 5° and more preferably not greater than 2°. The band cord 52F extends substantially in the circumferential direction.

The density of the band cord 52F in the full band 44 is not less than 20 ends/5 cm and not greater than 35 ends/5 cm. The density of the band cord 52F is represented as the number of cross-sections of the band cord 52F included per 5 cm width of the full band 44 in a cross-section of the full band 44 included in the meridian cross-section.

As described above, each edge band 46 includes the helically wound band cord 52E. The edge band 46 has a jointless structure. In the edge band 46, an angle of the band cord 52E relative to the circumferential direction is preferably not greater than 5° and more preferably not greater than 2°. The band cord 52E of the edge band 46 extends substantially in the circumferential direction.

The density of the band cord 52E in the edge band 46 is not less than 20 ends/5 cm and not greater than 35 ends/5 cm. The density of the band cord 52E is represented as the number of cross-sections of the band cord 52E included per 5 cm width of the edge band 46 in a cross-section of the edge band 46 included in the meridian cross-section.

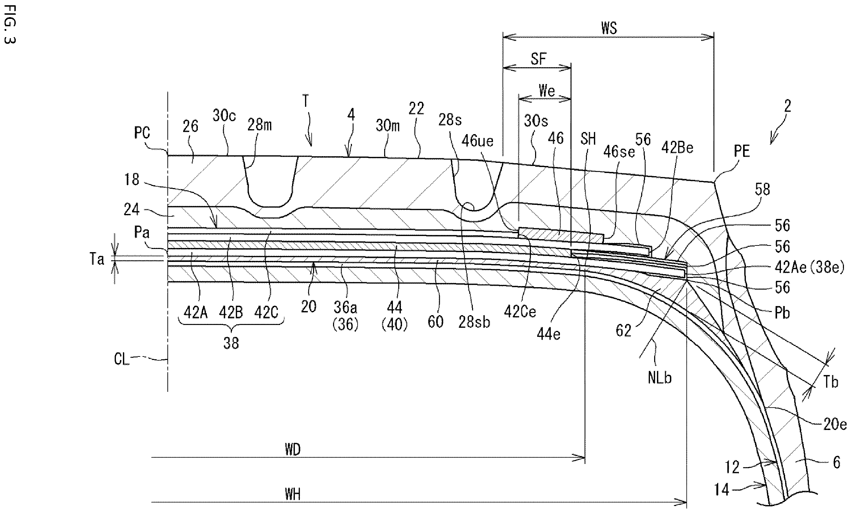

FIG. 3 shows a part of the cross-section of the tire 2 shown in FIG. 1. FIG. 3 shows the tread portion T of the tire 2.

In the tire 2, each of the end 42Ae of the first belt ply 42A and the end 42Be of the second belt ply 42B is covered with a rubber layer 56. Two rubber layers 56 are further disposed between the end 42Ae of the first belt ply 42A and the end 42Be of the second belt ply 42B, each of which is covered with the rubber layer 56. In the tire 2, an edge member 58 including four rubber layers 56 in total is formed between the end 42Ae of the first belt ply 42A and the end 42Be of the second belt ply 42B. The edge member 58 is formed from a crosslinked rubber. The edge member 58 contributes to maintaining the interval between the end 42Ae of the first belt ply 42A and the end 42Be of the second belt ply 42B. In the tire 2, a change of the positional relationship between the end 42Ae of the first belt ply 42A and the end 42Be of the second belt ply 42B due to running is suppressed. The edge member 58 is a part of the reinforcing layer 18. The reinforcing layer 18 of the tire 2 includes a pair of edge members 58 in addition to the belt 38 and the band 40.

The buffer layer 20 is located radially inward of the reinforcing layer 18. The buffer layer 20 is stacked on the carcass 12 on the radially inner side of the tread 4.

The buffer layer 20 is disposed such that both ends 20e thereof are opposed to each other across the equator plane CL. Each end 20e of the buffer layer 20 is located axially outward of the end 38e of the belt 38. Each end 20e of the buffer layer 20 is located radially inward of the end 38e of the belt 38.

The buffer layer 20 is formed from a crosslinked rubber. A complex elastic modulus E* of the buffer layer 20 is not less than 3.0 MPa and not greater than 6.0 MPa.

The buffer layer 20 includes a sheet portion 60 and a pair of hump portions 62.

The sheet portion 60 extends from the equator plane CL toward each hump portion 62. Each hump portion 62 is located axially outward of the sheet portion 60. The hump portion 62 is connected to the sheet portion 60. The hump portion 62 is integrated with the sheet portion 60.

In FIG. 3, a position indicated by reference character SH represents a specific position on the outer surface of the buffer layer 20. In the tire 2, the position SH is the boundary between the sheet portion 60 and the hump portion 62. The boundary SH is located axially outward of a bottom 28sb of the shoulder circumferential groove 28s.

In the present disclosure, the thickness of the buffer layer 20 is measured along a normal line of the inner surface of the tire 2 in the meridian cross-section of the tire 2.

In FIG. 3, a position indicated by reference character Pa is the point of intersection of the outer surface of the sheet portion 60 and the equator plane CL. A length indicated by arrows Ta is the thickness of the sheet portion 60 at the equator plane CL. The thickness Ta is measured along an inner surface normal line that is normal to the inner surface of the tire 2 and passes through the point of intersection Pa (that is, the equator plane CL).

In the tire 2, of the buffer layer 20, a portion between a first boundary SH and a second boundary SH opposed to each other across the equator plane CL is maintained with the thickness Ta, and this portion is the sheet portion 60. The sheet portion 60 has a uniform thickness Ta.

In FIG. 3, reference character Pb represents a specific position on the outer surface of the hump portion 62. A solid line NLb is an inner surface normal line that is normal to the inner surface of the tire 2 and passes through the position Pb. A length indicated by arrows Tb is the thickness of the hump portion 62 at the position Pb. The thickness Tb is measured along the inner surface normal line NLb of the tire 2.

In the tire 2, the thickness of the hump portion 62 gradually increases from the boundary SH between the sheet portion 60 and the hump portion 62 toward the position Pb, and gradually decreases from the position Pb toward the end 20e of the buffer layer 20. In the meridian cross-section of the tire 2, the hump portion 62 has a triangular cross-sectional shape.

The thickness of the hump portion 62 shows the maximum at the position Pb. The hump portion 62 has the maximum thickness Tb at the position Pb. The position Pb is a maximum thickness position of the hump portion 62.

In the tire 2, the thickness of the sheet portion 60 is represented as the thickness Ta at the equator plane CL. The thickness of the hump portion 62 is represented as the maximum thickness Tb. The hump portion 62 is thicker than the sheet portion 60.

In the tire 2, the reinforcing layer 18 is stacked on the buffer layer 20 from the radially outer side. A radially inner portion of the reinforcing layer 18 is composed of the first belt ply 42A. In the tire 2, the first belt ply 42A is stacked on the buffer layer 20.

As shown in FIG. 3, the maximum thickness position Pb of the hump portion 62 is located near the end 42Ae of the first belt ply 42A. The hump portion 62 has the maximum thickness Tb at the end 42Ae of the first belt ply 42A. As described above, the end 42Ae of the first belt ply 42A of the tire 2 is the end 38e of the belt 38. In the tire 2, the hump portion 62 has the maximum thickness Tb at the end 38e of the belt 38.

In the present disclosure, the hump portion 62 having the maximum thickness Tb at the end 38e of the belt 38 means that the shortest distance from the end 38e of the belt 38 to the maximum thickness position Pb of the hump portion 62 in the meridian cross-section of the tire 2 is not greater than 5 mm.

In the tire 2, the hump portion 62 of the buffer layer 20 is located between the end 42Ae of the first belt ply 42A and the carcass 12. When the tire 2 runs, strain occurs in a portion at the end 38e of the belt 38, but the thick hump portion 62 alleviates this strain. In the tire 2, occurrence of damage due to this strain is suppressed. The hump portion 62 contributes to improvement of the durability of the tread portion T.

The load acting on the tread portion T is reduced by bending of each side portion S. As described above, the tire 2 is a low-flatness tire. Since the bending allowance of the tire 2 is small, the side portion S cannot contribute to reduction of the load acting on the tread portion T, unlike each side portion of a high-flatness tire.

In a conventional tire, between a belt ply corresponding to the first belt ply 42A of the tire 2 (hereinafter, referred to as corresponding ply) and a carcass ply, a belt ply (hereinafter, referred to as tilt ply) in which the tilt angle of belt cords is adjusted so as to be smaller than the intersection angle of carcass cords and larger than the tilt angle of belt cords of the corresponding ply is provided. The tilt ply is stacked on a carcass, and the corresponding ply is stacked on the tilt ply.

In the tire 2, the sheet portion 60 of the buffer layer 20 is located between the carcass 12 and the reinforcing layer 18 on the inner side of the tread 4. The sheet portion 60 is stacked on the carcass 12 on the radially inner side of the reinforcing layer 18, and the first belt ply 42A which forms the radially inner portion of the reinforcing layer 18 is stacked on the sheet portion 60.

The sheet portion 60 is formed from a crosslinked rubber. In the tire 2, the sheet portion 60 contributes to reduction of the load acting on the tread portion T. The sheet portion 60 does not include belt cords, unlike the tilt ply of the conventional tire. In the tire 2, the load acting on the tread portion T is reduced as compared to a conventional low-flatness tire, and occurrence of damage and uneven wear due to this load is suppressed. The sheet portion 60 contributes to improvement of the durability of the tread portion T and uneven wear resistance.

Since the sheet portion 60 contributes to reduction of the load acting on the tread portion T, hump portions 62 smaller than later-described cushion layers provided in a conventional low-flatness tire can be used in the tire 2. The compact hump portions 62 contribute to preventing the end 38e of the belt 38 from being raised. The contour (hereinafter, also referred to as case line) of the carcass 12 is formed in an appropriate shape. In the tire 2, a ground-contact shape close to the target ground-contact shape is obtained. Even though the internal pressure distributed to the belt 38 is larger than in a high-flatness tire, a significant change of the ground-contact shape due to dimensional growth is suppressed. The buffer layer 20 which includes the sheet portion 60 and the pair of hump portions 62 contributes to improvement of uneven wear resistance.

As described above, the band 40 which forms a part of the reinforcing layer 18 includes the helically wound band cords 52. The band 40 holds the tread portion T. The band 40 suppresses a shape change of the tire 2 due to running. As described above, the case line can be made appropriate by the buffer layer 20. In the tire 2, the buffer layer 20 and the band 40 effectively suppress a shape change due to running. In the tire 2, even though the belt 38 which forms another part of the reinforcing layer 18 is composed of three belt plies 42, the ground-contact shape can be stabilized, and good uneven wear resistance can be achieved. Furthermore, the belt 38 being composed of three belt plies 42 contributes to mass reduction of the tire 2.

The tire 2 can achieve stabilization of the ground-contact shape and reduction of the load acting on the tread portion T, while achieving mass reduction thereof.

In the manufacture of a tire, a green tire (which is an unvulcanized tire and is also referred to as a raw cover) is prepared by combining components such as a tread and sidewalls. The tire is obtained by vulcanizing the green tire in a mold.

In a conventional tire, in order to alleviate strain of a belt, a pair of cushion layers are provided between ends of the belt and a carcass. The pair of cushion layers are disposed so as to be spaced apart from each other in the axial direction. At the time of forming a green tire, each cushion layer is set in position independently, so that there is a concern that the positions of the cushion layers may be shifted relative to the equator plane CL.

In the tire 2, each hump portion 62 corresponds to a cushion layer of a conventional tire. In the tire 2, the sheet portion 60 extends between a first hump portion 62 and a second hump portion 62. By setting the first hump portion 62 at an appropriate position, the second hump portion 62 is also set at an appropriate position. In the tire 2, the positions of the hump portions 62 are less likely to be shifted relative to the equator plane CL. The buffer layer 20 contributes to stabilization of the quality of the tire 2. Since the sheet portion 60 and the pair of hump portions 62 are simultaneously combined into a green tire, the time for forming the green tire is shortened. The buffer layer 20 also contributes to improvement of the productivity.

As described above, the tire 2 can achieve stabilization of the ground-contact shape and reduction of the load acting on the tread portion T, while achieving mass reduction thereof. The tire 2 is lighter and has better uneven wear resistance and tread durability than a conventional low-flatness tire. Furthermore, in the tire 2, stabilization of the quality and improvement of the productivity are achieved.

In the tire 2, the thickness Ta of the sheet portion 60 is preferably not less than 1.2 mm and not greater than 1.8 mm.

When the thickness Ta is set to be not less than 1.2 mm, the sheet portion 60 can effectively contribute to alleviation of strain. In the tire 2, good tread durability is achieved. From this viewpoint, the thickness Ta is more preferably not less than 1.3 mm and further preferably not less than 1.4 mm.

When the thickness Ta is set to be not greater than 1.8 mm, the case line is formed in an appropriate shape. In the tire 2, a ground-contact shape close to the target ground-contact shape is obtained. In the tire 2, good uneven wear resistance is achieved. From this viewpoint, the thickness Ta is more preferably not greater than 1.7 mm and further preferably not greater than 1.6 mm.

In the tire 2, the thickness Tb of the hump portion 62 is preferably not less than 2.0 mm and not greater than 6.0 mm.

When the thickness Tb is set to be not less than 2.0 mm, the hump portion 62 can effectively contribute to alleviation of strain generated in the portion at the end 38e of the belt 38. In the tire 2, good tread durability is achieved. From this viewpoint, the thickness Tb is more preferably not less than 2.5 mm and further preferably not less than 3.0 mm.

When the thickness Tb is set to be not greater than 6.0 mm, the case line is formed in an appropriate shape. In the tire 2, a ground-contact shape close to the target ground-contact shape is obtained. In the tire 2, good uneven wear resistance is achieved. From this viewpoint, the thickness Tb is more preferably not greater than 5.5 mm and further preferably not greater than 5.0 mm.

In the tire 2, from the viewpoint of improving tread durability and uneven wear resistance, more preferably, the thickness Ta of the sheet portion 60 is not less than 1.2 mm and not greater than 1.8 mm, and the thickness Tb of the hump portion 62 is not less than 2.0 mm and not greater than 6.0 mm.

In the tire 2, the ratio (Tb/Ta) of the thickness Tb of the hump portion 62 to the thickness Ta of the sheet portion 60 is preferably not less than 1.1 and not greater than 5.0.

When the ratio (Tb/Ta) is set to be not less than 1.1, the hump portion 62 contributes to alleviation of strain generated in the portion at the end 38e of the belt 38, and the sheet portion 60 contributes to stabilization of the ground-contact shape. In the tire 2, good tread durability and uneven wear resistance are achieved. From this viewpoint, the ratio (Tb/Ta) is more preferably not less than 1.5 and further preferably not less than 2.0.

When the ratio (Tb/Ta) is set to be not greater than 5.0, the hump portion 62 contributes to stabilization of the ground-contact shape, and the sheet portion 60 contributes to reduction of the load acting on the tread portion T. In this case as well, in the tire 2, good tread durability and uneven wear resistance are achieved. From this viewpoint, the ratio (Tb/Ta) is more preferably not greater than 4.0 and further preferably not greater than 3.0.

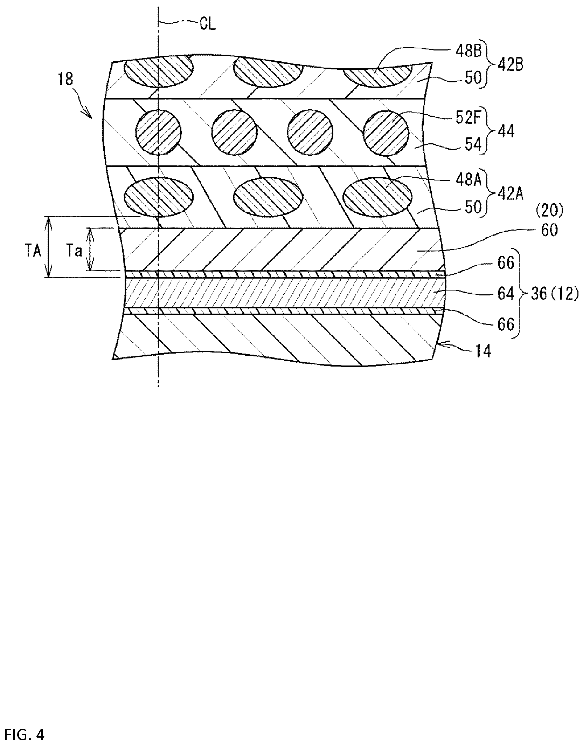

FIG. 4 shows the state of the arrangement of the buffer layer 20 at the equator plane CL. In FIG. 4, an element indicated by reference character 64 is the carcass cord of the carcass ply 36. An element indicated by reference character 66 is a topping rubber.

The buffer layer 20 is located between the carcass ply 36 and the first belt ply 42A. As shown in FIG. 4, the topping rubber 66 of the carcass ply 36, the buffer layer 20, and the topping rubber 50 of the first belt ply 42A are located between the carcass cord 64 and the first belt cords 48A. A rubber component is located between the carcass cord 64 and the first belt cords 48A, and the rubber component includes the topping rubber 66, the buffer layer 20, and the topping rubber 50.

In the tire 2, the distance between the carcass cord 64 and the first belt cords 48A is controlled by adjusting the thickness of the buffer layer 20. As described above, of the buffer layer 20, the portion between the first boundary SH and the second boundary SH is the sheet portion 60 having a uniform thickness Ta. The distance between the carcass cord 64 and the first belt cords 48A is constant between the first boundary SH and the second boundary SH.

In the present disclosure, the distance between the carcass cord 64 and the first belt cords 48A is the apparent thickness of the buffer layer 20. In particular, the apparent thickness of the buffer layer 20 between the first boundary SH and the second boundary SH is also referred to as apparent thickness of the sheet portion 60.

In FIG. 4, a length indicated by a double-headed arrow TA is the apparent thickness of the sheet portion 60 at the equator plane CL. The apparent thickness TA of the sheet portion 60 is measured along the equator plane CL. In the tire 2, the apparent thickness of the sheet portion 60 is represented as the apparent thickness TA of the sheet portion 60 at the equator plane CL.

In the tire 2, the apparent thickness TA of the sheet portion 60 is preferably not less than 2.2 mm and not greater than 2.8 mm.

When the apparent thickness TA is set to be not less than 2.2 mm, the rubber component between the carcass 12 and the reinforcing layer 18 can effectively contribute to alleviation of strain. Occurrence of damage due to this strain is prevented. From this viewpoint, the apparent thickness TA is more preferably not less than 2.4 mm.

When the apparent thickness TA is set to be not greater than 2.8 mm, the rubber component between the carcass 12 and the reinforcing layer 18 can contribute to suppression of a mass increase. From this viewpoint, the apparent thickness TA is more preferably not greater than 2.6 mm.

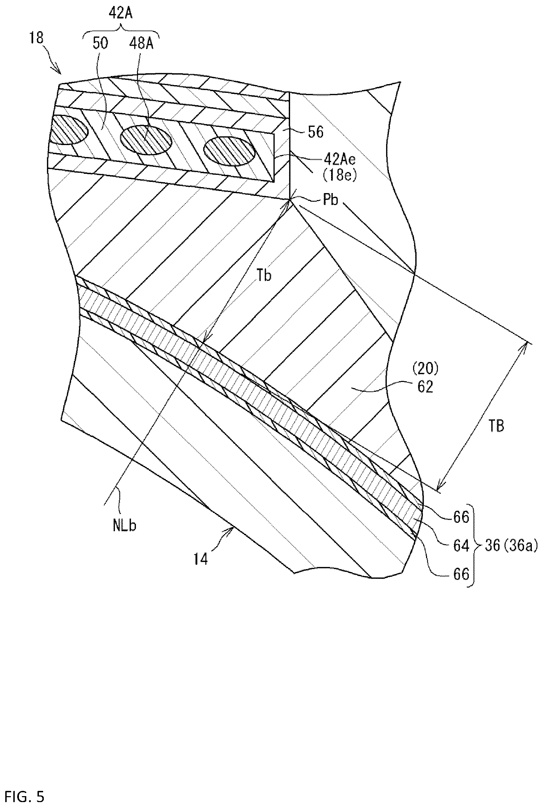

FIG. 5 shows the state of the arrangement of the buffer layer 20 at the end 18e of the reinforcing layer 18. The buffer layer 20 is stacked on the carcass ply 36. As shown in FIG. 5, the topping rubber 66 of the carcass ply 36 is located between the hump portion 62 of the buffer layer 20 and the carcass cord 64 of the carcass ply 36.

In FIG. 5, a length indicated by a double-headed arrow TB is the distance, from the carcass cord 64 to the maximum thickness position Pb of the hump portion 62, measured along the above-described inner surface normal line NLb. In the present disclosure, the distance TB is the apparent maximum thickness of the hump portion 62. The apparent maximum thickness TB of the hump portion 62 is larger than the apparent thickness TA of the sheet portion 60.

In the tire 2, the apparent maximum thickness TB of the hump portion 62 is preferably not less than 2.5 mm and not greater than 6.5 mm.

When the apparent maximum thickness TB is set to be not less than 2.5 mm, the hump portion 62 can effectively contribute to alleviation of strain generated in the portion at the end 38e of the belt 38. In the tire 2, good tread durability is achieved. From this viewpoint, the apparent maximum thickness TB is more preferably not less than 3.0 mm and further preferably not less than 3.5 mm.

When the apparent maximum thickness TB is set to be not greater than 6.5 mm, the case line is formed in an appropriate shape. In the tire 2, a ground-contact shape close to the target ground-contact shape is obtained. In the tire 2, good uneven wear resistance is achieved. From this viewpoint, the apparent maximum thickness TB is more preferably not greater than 6.0 mm and further preferably not greater than 5.5 mm.

In the tire 2, from the viewpoint of improving the tread durability and the uneven wear resistance, more preferably, the apparent thickness TA of the sheet portion 60 is not less than 2.2 mm and not greater than 2.8 mm, and the apparent maximum thickness TB of the hump portion 62 is not less than 2.5 mm and not greater than 6.5 mm.

In FIG. 1, a length indicated by an arrow WC is the width of the buffer layer 20. The width WC of the buffer layer 20 is the distance in the axial direction from a first end 20e of the buffer layer 20 to a second end 20e of the buffer layer 20.

In the tire 2, the ratio (WC/WT) of the width WC of the buffer layer 20 to the width WT of the tread 4 is preferably not less than 1.00 and not greater than 1.20.

When the ratio (WC/WT) is set to be not less than 1.00, the buffer layer 20 can effectively contribute to alleviation of strain generated in the portion at the end 38e of the belt 38. In the tire 2, good tread durability is achieved. From this viewpoint, the ratio (WC/WT) is more preferably not less than 1.05.

When the ratio (WC/WT) is set to be not greater than 1.20, the bending allowance of the side portion S is appropriately maintained. In the tire 2, occurrence of damage (Cord Broken Up: CBU) with a break of the carcass cord 64 is suppressed. From this viewpoint, the ratio (WC/WT) is more preferably not greater than 1.15.

In FIG. 3, a length indicated by an arrow WH is the distance in the axial direction from the position Pb at which the first hump portion 62 has the maximum thickness Tb to the position Pb at which the second hump portion 62 has the maximum thickness Tb. The distance WH in the axial direction is also referred to as inter-hump distance.

As described above, the maximum thickness position Pb of the hump portion 62 is located near the end 42Ae of the first belt ply 42A. Since the end 42Ae of the first belt ply 42A of the tire 2 is the end 38e of the belt 38, the maximum thickness position Pb of the hump portion 62 is located near the end 38e of the belt 38. Accordingly, the case line is formed in an appropriate shape. In the tire 2, a ground-contact shape close to the target ground-contact shape is obtained. In the tire 2, good uneven wear resistance is achieved. From this viewpoint, in the tire 2, the ratio (WH/WB) of the inter-hump distance WH to the width WB of the belt 38 is preferably not less than 0.95 and not greater than 1.05. The ratio (WH/WB) is more preferably not less than 0.98, and more preferably not greater than 1.02.

In FIG. 3, a length indicated by an arrow WD is the distance in the axial direction from the boundary SH on the first hump portion 62 side between this hump portion 62 and the sheet portion 60 to the boundary SH on the second hump portion 62 side between this hump portion 62 and the sheet portion 60. The distance WD in the axial direction is also referred to as inter-boundary distance.

In the present disclosure, the boundary SH between the sheet portion 60 and the hump portion 62 is represented as a position at which the apparent thickness of the buffer layer 20 is 1.2 times the apparent thickness TA of the sheet portion 60.

In the tire 2, the ratio (WD/WH) of the inter-boundary distance WD to the inter-hump distance WH is preferably not less than 0.65 and not greater than 0.85.

When the ratio (WD/WH) is set to be not less than 0.65, the hump portion 62 is made compact, and a case line having an appropriate shape is formed. A ground-contact shape close to the target ground-contact shape is obtained. In the tire 2, good uneven wear resistance is achieved. From this viewpoint, the ratio (WD/WH) is more preferably not less than 0.70.

When the ratio (WD/WH) is set to be not greater than 0.85, the hump portion 62 can effectively contribute to alleviation of strain generated in the portion at the end 38e of the belt 38. In the tire 2, good tread durability is achieved. From this viewpoint, the ratio (WD/WH) is more preferably not greater than 0.80.

As described above, the band 40 which forms a part of the reinforcing layer 18 of the tire 2 includes the full band 44. The full band 44 extends in the axial direction from the equator plane CL toward each end 44e. The full band 44 includes the helically wound band cord 52F. The full band 44 holds the tread portion T. The full band 44 suppresses a shape change of the tire 2 due to running.

In a running state of a tire, a tread end portion moves actively. The stiffness of the portion where circumferential grooves are formed is lower than the stiffness of the portion where the circumferential grooves are not formed. A low-flatness tire has a wider tread surface than a high-flatness tire. In the low-flatness tire, each shoulder circumferential groove is located more axially outward than that in the high-flatness tire. In the low-flatness tire, a shape change is large around each shoulder circumferential groove.

In the tire 2, the full band 44 is formed such that each end 44e of the full band 44 is located axially outward of the shoulder circumferential groove 28s. In the tire 2, the full band 44 is located radially inward of the shoulder circumferential groove 28s.

Although the tire 2 is a low-flatness tire, the full band 44 effectively suppresses deformation around each shoulder circumferential groove 28s. In the tire 2, a shape change is effectively suppressed around the shoulder circumferential groove 28s. From this viewpoint, in the tire 2, each end 44e of the full band 44 is preferably located axially outward of the shoulder circumferential groove 28s.

In FIG. 3, a double-headed arrow SF indicates the distance in the axial direction from the shoulder circumferential groove 28s, specifically, the outer edge of the shoulder circumferential groove 28s, to the end 44e of the full band 44. A double-headed arrow WS indicates the width of the shoulder land portion 30s. The width WS is represented as the distance in the axial direction from the inner end of the top surface of the shoulder land portion 30s (that is, the outer edge of the shoulder circumferential groove 28s) to the outer end of the top surface (in the tire 2, the end PE of the tread surface 22).

In the tire 2, the ratio (SF/WS) of the distance SF in the axial direction from the shoulder circumferential groove 28s to the end 44e of the full band 44, to the width WS of the shoulder land portion 30s, is preferably not greater than 50%. Accordingly, the end 44e of the full band 44 is located away from the end portion of the tread 4 which moves actively in a running state, so that fluctuation of the tension of the band cord 52 is suppressed. In the tire 2, occurrence of a break of the band cord 52 is suppressed. The full band 44 of the tire 2 contributes to suppression of a shape change. From this viewpoint, the ratio (SF/WS) is more preferably not greater than 35% and further preferably not greater than 25%.

When the ratio (SF/WS) is set to be not less than 10%, the end 44e of the full band 44 is located at an appropriate interval from the shoulder circumferential groove 28s, specifically, the bottom 28sb of the shoulder circumferential groove 28s. In the tire 2, occurrence of damage starting from the bottom 28sb of the shoulder circumferential groove 28s is suppressed. Since the width of the full band 44 is ensured, the full band 44 contributes to suppression of a shape change of the tire 2. From this viewpoint, the ratio (SF/WS) is more preferably not less than 15%.

As described above, in the tire 2, each end 44e of the full band 44 is located axially inward of the end 38e of the belt 38. The belt 38 is wider than the full band 44. The belt 38 holds each end 44e of the full band 44. The belt 38 contributes to suppression of fluctuation of the tension of the band cord 52F included in the full band 44. Since occurrence of a break of the band cord 52F due to the tension fluctuation is prevented, the full band 44 can stably exhibit the function of suppressing a shape change. From this viewpoint, each end 44e of the full band 44 is preferably located axially inward of the end 38e of the belt 38. In particular, from the viewpoint of effectively suppressing a shape change around each shoulder circumferential groove 28s, in the tire 2, each end 44e of the full band 44 is more preferably located between the shoulder circumferential groove 28s and the end 38e of the belt 38 in the axial direction.

In the tire 2, the full band 44 is located between the first belt ply 42A and the second belt ply 42B in the radial direction.

The first belt ply 42A and the second belt ply 42B reduce the force acting on the full band 44. In particular, since the belt cords 48 included in the first belt ply 42A and the belt cords 48 included in the second belt ply 42B intersect each other, the force acting on the full band 44 is effectively reduced. Since fluctuation of the tension of the band cord 52F included in the full band 44 is suppressed, occurrence of a break of the band cord 52F due to this tension fluctuation is prevented. The full band 44 of the tire 2 can stably exhibit the function of suppressing a shape change. From this viewpoint, in the tire 2, the full band 44 is preferably located between the first belt ply 42A and the second belt ply 42B in the radial direction. In particular, from the viewpoint of effectively suppressing a shape change around each shoulder circumferential groove 28s, in the tire 2, more preferably, the full band 44 is located between the first belt ply 42A and the second belt ply 42B in the radial direction, and each end 44e of the full band 44 is located between the shoulder circumferential groove 28s and the end 38e of the belt 38 in the axial direction.

As described above, in the axial direction, each end 44e of the full band 44 is located inward of the end 42Ae of the first belt ply 42A, and each end 44e of the full band 44 is located inward of the end 42Be of the second belt ply 42B. In other words, the first belt ply 42A and the second belt ply 42B are wider than the full band 44. In the tire 2, the full band 44 is interposed between the first belt ply 42A and the second belt ply 42B which are wider than the full band 44. Since fluctuation of the tension of the band cord 52F included in the full band 44 is more effectively suppressed, a break is less likely to occur in the band cord 52F of the full band 44. The full band 44 of the tire 2 can stably exhibit the function of suppressing a shape change. From this viewpoint, in the tire 2, preferably, the full band 44 is located between the first belt ply 42A and the second belt ply 42B in the radial direction, each end 44e of the full band 44 is located axially inward of the end 42Ae of the first belt ply 42A, and each end 44e of the full band 44 is located axially inward of the end 42Be of the second belt ply 42B. In particular, from the viewpoint of effectively suppressing a shape change around each shoulder circumferential groove 28s, in the tire 2, more preferably, the full band 44 is located between the first belt ply 42A and the second belt ply 42B in the radial direction, each end 44e of the full band 44 is located axially inward of the end 42Ae of the first belt ply 42A, each end 44e of the full band 44 is located axially inward of the end 42Be of the second belt ply 42B, and further each end 44e of the full band 44 is located between the shoulder circumferential groove 28s and the end 38e of the belt 38 in the axial direction.

As described above, the band 40 which forms a part of the reinforcing layer 18 of the tire 2 includes the pair of edge bands 46 in addition to the full band 44.

In the tire 2, each edge band 46 is located between the tread 4 and the full band 44 in the radial direction. The edge band 46 is located radially outward of the end 44e of the full band 44. An inner end 46ue of the edge band 46 is located axially inward of the end 44e of the full band 44. An outer end 46se of the edge band 46 is located axially outward of the end 44e of the full band 44. The edge band 46 overlaps the end 44e of the full band 44 in the radial direction.

In the tire 2, the position of the outer end 46se of the edge band 46 may coincide with the position of the end 44e of the full band 44 in the axial direction. In this case as well, the edge band 46 is located radially outward of the end 44e of the full band 44, and the edge band 46 overlaps the end 44e of the full band 44 in the radial direction.

In the tire 2, each edge band 46 is located outward of the end 44e of the full band 44.

Although the tire 2 is a low-flatness tire, the full band 44 and the pair of edge bands 46 effectively suppress deformation of the tread portion T. Since a change of the case line is suppressed, a change of the ground-contact shape is suppressed.

Since the edge bands 46 hold the ends 44e of the full band 44, fluctuation of the tension of the band cord 52F included in the full band 44 is suppressed. Occurrence of a break of the band cord 52F due to the tension fluctuation is prevented, so that the full band 44 can stably exhibit the function of suppressing a shape change. In the tire 2, the ground-contact shape is stabilized. From this viewpoint, preferably, the tire 2 includes the full band 44 disposed such that both ends 44e thereof are opposed to each other across the equator plane CL, and the edge band 46 is located radially outward of each end 44e of the full band 44.

As described above, in the tire 2, the inner end 46ue of each edge band 46 is located axially inward of the end 44e of the full band 44. In FIG. 3, a length indicated by a double-headed arrow We is the distance in the axial direction from the end 44e of the full band 44 to the inner end 46ue of the edge band 46.

In the tire 2, the distance We in the axial direction from the end 44e of the full band 44 to the inner end 46ue of the edge band 46 is preferably not less than 10 mm. Accordingly, the edge band 46 effectively holds the end 44e of the full band 44. Fluctuation of the tension of the band cord 52F included in the full band 44 is suppressed, so that occurrence of a break of the band cord 52F due to this tension fluctuation is suppressed. The full band 44 of the tire 2 can more stably exhibit the function of suppressing a shape change. From this viewpoint, the distance We in the axial direction is preferably not less than 20 mm. From the viewpoint of suppressing the influence of the edge band 46 on the mass of the tire 2, the distance We in the axial direction is preferably not greater than 50 mm.

In the tire 2, involvement in occurrence of damage starting from the bottom 28sb of the shoulder circumferential groove 28s is taken into consideration for setting the position of the inner end 46ue of the edge band 46. From the viewpoint of effectively suppressing occurrence of damage starting from the bottom 28sb of the shoulder circumferential groove 28s, in the axial direction, the inner end 46ue of the edge band 46 is preferably located outward of the bottom 28sb of the shoulder circumferential groove 28s, and is more preferably located further outward of the shoulder circumferential groove 28s. In the tire 2, the inner end 46ue of the edge band 46 may be located inward of the bottom 28sb of the shoulder circumferential groove 28s in the axial direction. In this case, the inner end 46ue of the edge band 46 is more preferably located further inward of the shoulder circumferential groove 28s in the axial direction.

As shown in FIG. 3, in the tire 2, the boundary SH between the sheet portion 60 and the hump portion 62 is located axially outward of the end 44e of the full band 44. Accordingly, the hump portion 62 is made compact, and a case line having an appropriate shape is formed. A ground-contact shape close to the target ground-contact shape is obtained. In the tire 2, good uneven wear resistance is achieved. From this viewpoint, the boundary SH between the sheet portion 60 and the hump portion 62 is preferably located axially outward of the end 44e of the full band 44.

As shown in FIG. 3, in the tire 2, the boundary SH between the sheet portion 60 and the hump portion 62 is located axially inward of the outer end 46se of the edge band 46. Accordingly, concentration of strain on a portion at the boundary SH between the sheet portion 60 and the hump portion 62 is suppressed. The hump portion 62 can effectively contribute to alleviation of strain generated in the portion at the end 38e of the belt 38. In the tire 2, good tread durability is achieved. From this viewpoint, the boundary SH between the sheet portion 60 and the hump portion 62 is preferably located axially inward of the outer end 46se of the edge band 46.

In the tire 2, from the viewpoint of achieving good uneven wear resistance and tread durability, the boundary SH between the sheet portion 60 and the hump portion 62 is more preferably located between the end 44e of the full band 44 and the outer end 46se of the edge band 46 in the axial direction.

As is obvious from the above description, according to the present invention, the heavy duty pneumatic tire 2 that can achieve stabilization of the ground-contact shape and reduction of the load acting on the tread portion T, while achieving mass reduction thereof, is obtained. The present invention exhibits a remarkable effect in the low-flatness heavy duty pneumatic tire 2 having a nominal aspect ratio of not greater than 65%.

The above-described technology for achieving stabilization of a ground-contact shape and reduction of the load acting on a tread portion, while achieving mass reduction thereof, can be applied to various tires.

## Claims

1. A heavy duty pneumatic tire (2) comprising:
a tread (4) having at least three circumferential grooves (28, 28s, 28m) formed thereon;
a pair of sidewalls (6) each connected to an end of the tread (4);
a pair of beads (8) each located radially inward of the sidewall (6);
a carcass (12) located inward of the tread (4) and the pair of sidewalls (6) and extending on and between a first bead (8) and a second bead (8) out of the pair of beads (8);
a reinforcing layer (18) located radially inward of the tread (4); and
a buffer layer (20) located radially inward of the reinforcing layer (18) and formed from a crosslinked rubber, wherein
among the at least three circumferential grooves (28, 28s, 28m), a circumferential groove (28) located on each outer side in an axial direction is a shoulder circumferential groove (28s),
the reinforcing layer (18) includes a belt (38) including a large number of belt cords (48, 48A, 48B, 48C) aligned with each other,
the buffer layer (20) is stacked on the carcass (12),
each end (20e) of the buffer layer (20) is located axially outward of an end (38e) of the belt (38),
the belt (38) includes a first belt ply (42A) stacked on the buffer layer (20), a second belt ply (42B) located radially outward of the first belt ply (42A), and a third belt ply (42C) located radially outward of the second belt ply (42B),
the buffer layer (20) includes a sheet portion (60) and a pair of hump portions (62) located axially outward of the sheet portion (60) and thicker than the sheet portion (60), and
each of the pair of hump portions (62) has a maximum thickness (Tb) at an end (42Ae) of the first belt ply (42A),
**characterized in that**
a nominal aspect ratio of the heavy duty pneumatic tire (2) is not greater than 65%,
the reinforcing layer (18) further includes a band (40) including a helically wound band cord (52, 52E, 52F), and
the hump portion (62) is integrated with the sheet portion (60).

2. The heavy duty pneumatic tire (2) according to claim 1, wherein the sheet portion (60) has an apparent thickness (TA) of not less than 2.2 mm and not greater than 2.8 mm.

3. The heavy duty pneumatic tire (2) according to claim 1 or 2, wherein each hump portion (62) has an apparent maximum thickness (TB) of not less than 2.5 mm and not greater than 6.5 mm.

4. The heavy duty pneumatic tire (2) according to any one of claims 1 to 3, wherein a ratio (WC/WT) of a width (WC) of the buffer layer (20) to a width (WT) of the tread (4) is not less than 1.00 and not greater than 1.20.

5. The heavy duty pneumatic tire (2) according to any one of claims 1 to 4, wherein a ratio (WH/WB) of a distance (WH) in the axial direction from a position (Pb) at which a first hump portion (62) out of the pair of hump portions (62) has a maximum thickness (Tb) to a position (Pb) at which a second hump portion (62) out of the pair of hump portions (62) has a maximum thickness (Tb), to a width (WB) of the belt (38), is not less than 0.95 and not greater than 1.05.

6. The heavy duty pneumatic tire (2) according to any one of claims 1 to 5, wherein
the band (40) includes a full band (44) located between the first belt ply (42A) and the second belt ply (42B) in a radial direction,
each end (44e) of the full band (44) is located axially outward of the shoulder circumferential groove (28s),
each end (44e) of the full band (44) is located axially inward of the end (42Ae) of the first belt ply (42A), and
each end (44e) of the full band (44) is located axially inward of an end (42Be) of the second belt ply (42B).

7. The heavy duty pneumatic tire (2) according to claim 6, wherein
the band (40) further includes a pair of edge bands (46) opposed to each other across an equator plane (CL), and
each of the pair of edge bands (46) is located radially outward of the end (44e) of the full band (44).

## Patentansprüche

1. Schwerlastluftreifen (2), umfassend:
eine Lauffläche (4) mit mindestens drei darauf ausgebildeten Umfangsrillen (28, 28s, 28m);
ein Paar Seitenwände (6), die jeweils mit einem Ende der Lauffläche (4) verbunden sind;
ein Paar Wülste (8), die jeweils radial innen von der Seitenwand (6) angeordnet sind;
eine Karkasse (12), die innen von der Lauffläche (4) und dem Paar Seitenwänden (6) angeordnet ist und sich auf und zwischen einem ersten Wulst (8) und einem zweiten Wulst (8) aus dem Paar Wülsten (8) erstreckt;
eine Verstärkungsschicht (18), die radial innen von der Lauffläche (4) angeordnet ist; und
eine Pufferschicht (20), die radial innen von der Verstärkungsschicht (18) angeordnet ist und aus einem vernetzten Kautschuk gebildet ist, wobei
unter den mindestens drei Umfangsrillen (28, 28s, 28m) eine Umfangsrille (28), die auf jeder Außenseite in einer axialen Richtung angeordnet ist, eine Schulterumfangsrille (28s) ist,
die Verstärkungsschicht (18) einen Gürtel (38) umfasst, der eine große Anzahl von Gürtelkorden (48, 48A, 48B, 48C) umfasst, die miteinander ausgerichtet sind,
die Pufferschicht (20) auf die Karkasse (12) gestapelt ist,
jedes Ende (20e) der Pufferschicht (20) axial außen von einem Ende (38e) des Gürtels (38) angeordnet ist,
der Gürtel (38) eine erste Gürtellage (42A), die auf die Pufferschicht (20) gestapelt ist, eine zweite Gürtellage (42B), die radial außen von der ersten Gürtellage (42A) angeordnet ist, und eine dritte Gürtellage (42C), die radial außen von der zweiten Gürtellage (42B) angeordnet ist, umfasst,
die Pufferschicht (20) einen Plattenabschnitt (60) und ein Paar Buckelabschnitte (62) umfasst, die axial außen von dem Plattenabschnitt (60) angeordnet und dicker als der Plattenabschnitt (60) sind, und
jeder des Paars Buckelabschnitte (62) eine maximale Dicke (Tb) an einem Ende (42Ae) der ersten Gürtellage (42A) aufweist,
**dadurch gekennzeichnet, dass**
ein Nennaspektverhältnis des Schwerlastluftreifens (2) nicht größer als 65 % ist,
die Verstärkungsschicht (18) ferner ein Band (40) umfasst, das einen spiralförmig gewickelten Bandkord (52, 52E, 52F) umfasst, und
der Buckelabschnitt (62) mit dem Plattenabschnitt (60) integriert ist.

2. Schwerlastluftreifen (2) nach Anspruch 1, wobei der Plattenabschnitt (60) eine wahrnehmbare Dicke (TA) von nicht weniger als 2,2 mm und nicht mehr als 2,8 mm aufweist.

3. Schwerlastluftreifen (2) nach Anspruch 1 oder 2, wobei jeder Buckelabschnitt (62) eine wahrnehmbare maximale Dicke (TB) von nicht weniger als 2,5 mm und nicht mehr als 6,5 mm aufweist.

4. Schwerlastluftreifen (2) nach einem der Ansprüche 1 bis 3, wobei ein Verhältnis (WC/WT) einer Breite (WC) der Pufferschicht (20) zu einer Breite (WT) der Lauffläche (4) nicht weniger als 1,00 und nicht mehr als 1,20 beträgt.

5. Schwerlastluftreifen (2) nach einem der Ansprüche 1 bis 4, wobei ein Verhältnis (WH/WB) eines Abstands (WH) in der axialen Richtung von einer Position (Pb), an der ein erster Buckelabschnitt (62) aus dem Paar Buckelabschnitte (62) eine maximale Dicke (Tb) aufweist, zu einer Position (Pb), an der ein zweiter Buckelabschnitt (62) aus dem Paar Buckelabschnitte (62) eine maximale Dicke (Tb) aufweist, zu einer Breite (WB) des Gürtels (38) nicht weniger als 0,95 und nicht mehr als 1,05 beträgt.

6. Schwerlastluftreifen (2) nach einem der Ansprüche 1 bis 5, wobei
das Band (40) ein Vollband (44) umfasst, das zwischen der ersten Gürtellage (42A) und der zweiten Gürtellage (42B) in einer radialen Richtung angeordnet ist,
jedes Ende (44e) des Vollbands (44) axial außen von der Schulterumfangsrille (28s) angeordnet ist,
jedes Ende (44e) des Vollbands (44) axial innen von dem Ende (42Ae) der ersten Gürtellage (42A) angeordnet ist, und
jedes Ende (44e) des Vollbands (44) axial innen von einem Ende (42Be) der zweiten Gürtellage (42B) angeordnet ist.

7. Schwerlastluftreifen (2) nach Anspruch 6, wobei
das Band (40) ferner ein Paar Randbänder (46) umfasst, die einander über eine Äquatorebene (CL) hinweg gegenüberliegen, und
jedes des Paars Randbänder (46) radial außen von dem Ende (44e) des Vollbands (44) angeordnet ist.

## Revendications

1. Bandage pneumatique pour service intensif (2) comprenant :
une bande de roulement (4) ayant au moins trois rainures circonférentielles (28, 28s, 28m) formées sur celle-ci ;
une paire de parois latérales (6) connectées chacune à une extrémité de la bande de roulement (4) ;
une paire de talons (8) situés chacun radialement à l'intérieur de la paroi latérale (6) ;
une carcasse (12) située à l'intérieur de la bande de roulement (4) et de la paire de parois latérales (6) et s'étendant sur et entre un premier talon (8) et un second talon (8) parmi la paire de talons (8) ;
une couche de renforcement (18) située radialement à l'intérieur de la bande de roulement (4) ; et
une couche tampon (20) située radialement à l'intérieur de la couche de renforcement (18) et formée à partir d'un caoutchouc réticulé, dans lequel
parmi lesdites au moins trois rainures circonférentielles (28, 28s, 28m), une rainure circonférentielle (28) située sur chaque côté extérieur dans une direction axiale est une rainure circonférentielle d'épaulement (28s),
la couche de renforcement (18) inclut une ceinture (38) incluant un grand nombre de câblés de ceinture (48, 48A, 48B, 48C) alignés les uns avec les autres,
la couche tampon (20) est empilée sur la carcasse (12),
chaque extrémité (20e) de la couche tampon (20) est située axialement à l'extérieur d'une extrémité (38e) de la ceinture (38),
la ceinture (38) inclut une première nappe de ceinture (42A) empilée sur la couche tampon (20), une deuxième nappe de ceinture (42B) située radialement à l'extérieur de la première nappe de ceinture (42A), et une troisième nappe de ceinture (42C) située radialement à l'extérieur de la deuxième nappe de ceinture (42B),
la couche tampon (20) inclut une portion en feuille (60) et une paire de portions en renflement (62) situées axialement à l'extérieur de la portion en feuille (60) et plus épaisses que la portion en feuille (60), et
chacune de la paire de portions en renflement (62) a une épaisseur maximum (Tb) à une extrémité (42Ae) de la première nappe de ceinture (42A),
**caractérisé en ce que**
un rapport d'aspect nominal du bandage pneumatique pour service intensif (2) n'est pas supérieur à 65 %,
la couche de renforcement (18) inclut en outre une bande (40) incluant un câblé de bande enroulé de manière hélicoïdale (52, 52E, 52F), et
la portion en renflement (62) est intégrée avec la portion en feuille (60).

2. Bandage pneumatique pour service intensif (2) selon la revendication 1, dans lequel la portion en feuille (20) a une épaisseur apparente (TA) qui n'est pas inférieure à 2,2 mm et qui n'est pas supérieure à 2,8 mm.

3. Bandage pneumatique pour service intensif (2) selon la revendication 1 ou 2, dans lequel chaque portion en renflement (62) a une épaisseur maximum apparente (TB) qui n'est pas inférieure à 2,5 mm et qui n'est pas supérieure à 6,5 mm.

4. Bandage pneumatique pour service intensif (2) selon l'une quelconque des revendications 1 à 3, dans lequel un rapport (WC/WT) d'une largeur (WC) de la couche tampon (20) sur une largeur (WT) de la bande de roulement (4) n'est pas inférieur à 1,00 et n'est pas supérieur à 1,20.

5. Bandage pneumatique pour service intensif (2) selon l'une quelconque des revendications 1 à 4, dans lequel un rapport (WH/WB) d'une distance (WH) dans la direction axiale depuis une position (Pb) à laquelle une première portion en renflement (62) parmi la paire de portions en renflement (62) a une épaisseur maximum (Tb) jusqu'à une position (Pb) à laquelle une seconde portion en renflement (62) parmi la paire de portions en renflement (62) a une épaisseur maximum (Tb), sur une largeur (WB) de la ceinture (38), n'est pas inférieur à 0,95 et n'est pas supérieur à 1,05.

6. Bandage pneumatique pour service intensif (2) selon l'une quelconque des revendications 1 à 5, dans lequel
la bande (40) inclut une bande complète (44) située entre la première nappe de ceinture (42A) et la seconde nappe de ceinture (42B) dans une direction radiale,
chaque extrémité (44e) de la bande complète (44) est située axialement à l'extérieur de la rainure circonférentielle d'épaulement (28s),
chaque extrémité (44e) de la bande complète (44) est située axialement à l'intérieur de l'extrémité (42Ae) de la première nappe de ceinture (42A), et
chaque extrémité (44e) de la bande complète (44) est située axialement à l'intérieur d'une extrémité (42Be) de la seconde nappe de ceinture (42B).

7. Bandage pneumatique pour service intensif (2) selon la revendication 6, dans lequel
la bande (40) inclut en outre une paire de bandes de bord (46) opposées l'une à l'autre à travers un plan d'équateur (CL), et
chacune de la paire de bandes de bord (46) est située radialement à l'extérieur de l'extrémité (44e) de la bande complète.
